(19)

Europäisches
Patentamt
European
Patent Office
Office européen
des brevets

(11) **EP 2 532 705 A1**

(12) **EUROPEAN PATENT APPLICATION**
published in accordance with Art. 153(4) EPC

(43) Date of publication:
**12.12.2012 Bulletin 2012/50**

(21) Application number: **11739617.6**

(22) Date of filing: **18.01.2011**

(51) Int Cl.:
**C08J 9/12** (2006.01)      **C08K 5/13** (2006.01)
**C08K 5/3435** (2006.01)      **C08L 101/00** (2006.01)

(86) International application number:
**PCT/JP2011/050702**

(87) International publication number:
**WO 2011/096268 (11.08.2011 Gazette 2011/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2011   JP 2011005366
04.02.2010   JP 2010022720**

(71) Applicant: **Nitto Denko Corporation
Osaka 567-8680 (JP)**

(72) Inventors:
• **KANADA, Mitsuhiro
Ibaraki-shi
Osaka 567-8680 (JP)**

• **YAMAMOTO, Takayuki
Ibaraki-shi
Osaka 567-8680 (JP)**
• **KOUNO, Yoshinori
Ibaraki-shi
Osaka 567-8680 (JP)**
• **YASUDA, Hironori
Ibaraki-shi
Osaka 567-8680 (JP)**

(74) Representative: **Grünecker, Kinkeldey,
Stockmair & Schwanhäusser
Leopoldstrasse 4
80802 München (DE)**

(54) **THERMOPLASTIC RESIN FOAM AND METHOD FOR PRODUCING SAME**

(57)    There is provided a thermoplastic resin foam being excellent in strength, flexibility, cushioning properties, strain recovery and the like, particularly being low in the shrinkage of the cell structure due to the resilience of the resin, and being good in productivity. There is also provided a process for producing a thermoplastic resin foam which can produce, with good productivity, the thermoplastic resin foam being excellent in strength, flexibility, cushioning properties, strain recovery and the like, particularly being low in the shrinkage of the cell structure due to the resilience of the resin. The thermoplastic resin foam according to the present invention is obtained from a thermoplastic resin composition containing a thermoplastic elastomer, an active energy-ray curable compound and a radical trapping agent. The thermoplastic resin foam according to the present invention is also obtained from a thermoplastic resin composition containing a thermoplastic elastomer, an active energy-ray curable compound, a thermal crosslinking agent and a radical trapping agent.

EP 2 532 705 A1

**Description**

Technical Field

The present invention relates to thermoplastic resin foams excellent in the cushioning properties, the strain recovery and the like, and to processes for producing the foams. Particularly, the present invention relates to a thermoplastic resin foam which is very useful, for example, as internal insulators of electronic devices and the like, cushioning materials, sound insulators, heat insulators, food packaging materials, clothing materials and building materials, and exhibits cushioning properties and an excellent strain recovery, and to a process for producing the foam.

Background Art

Foams used, for example, as internal insulators of electronic devices and the like, cushioning materials, sound insulators, heat insulators, food packaging materials, clothing materials and building materials, from the viewpoint of the sealing properties in the case where these are incorporated as components, are conventionally demanded to be flexible and excellent in the cushioning properties, the heat insulation and the like. As such foams, there are well known foams of thermoplastic resins represented by polyolefinic resins such as polyethylene and polypropylene. However, these foams are weak in strength, and poor in the flexibility and the cushioning properties, and have drawbacks of exhibiting an inferior strain recovery and reduced sealing properties particularly when being compressed and held at high temperatures. An attempt has been made to improve the strain recovery by blending rubber components and the like to impart an elasticity to thereby make a material itself flexible and to simultaneously impart the resilient properties by the elasticity. However, although blending elastomer components usually improves the resilient properties by elasticity, in a step of fabricating a foam, after a resin is foamed and deformed with a blowing agent, the cell structure shrinks due to the resilience of the resin, causing the expansion ratio of the foam obtained finally to be low.

Conventional common processes for obtaining foams usually include physical processes and chemical processes. A usual physical process involves dispersing a low-boiling point liquid (blowing agent) such as a chlorofluorocarbon or a hydrocarbon in a polymer, and then heating the dispersion to volatilize the blowing agent to thereby form cells. A chemical process involves forming cells by a gas generated by pyrolysis of a compound (blowing agent) added to a polymer base to thereby obtain a foam. The foaming technology by physical means poses various types of environmental issues such as the harmfulness of a substance used as a blowing agent and the depletion of the ozone layer. The case of using chemical means poses problems of the contamination with corrosive gases and impurities remaining in a foam after foaming, and particularly in applications to electronic components, since the requirement for the low contamination is high, the case is not preferable.

As a process for obtaining a foam having a small cell diameter and a high cell density, a process has recently been proposed in which a gas such as nitrogen or carbon dioxide is dissolved in a polymer at a high pressure, and thereafter, the pressure is released and the polymer is heated up to nearly the glass transition temperature or softening point of the polymer to thereby form cells. The process in which such a gas such as nitrogen or carbon dioxide is dissolved in a polymer at a high pressure, and thereafter, the pressure is released and the polymer is heated up to, as the case may be, the glass transition temperature to thereby grow cells is an excellent process for obtaining a micro-cellular foam which has not been seen so far. In this foaming, nuclei are formed from a thermodynamically unstable state, and the expansion and growth of the nuclei forms cells to thereby obtain a micro-cellular foam. Further, in order to fabricate a flexible foam by using this foaming process, various attempts are proposed to apply the foaming process to thermoplastic elastomers such as thermoplastic polyurethane. For example, a process is known in which a thermoplastic polyurethane resin is foamed by this foaming process to thereby obtain a foam having uniform and fine cells and being hardly deformable (see Patent Literature 1).

However, problems of the process are that, since the gas such as nitrogen or carbon dioxide remaining in the cells forms the cells by the expansion and growth of the nuclei after the pressure is released to the atmosphere, a foam having a high expansion ratio is once formed; however, the gas such as nitrogen or carbon dioxide remaining in the cells gradually passes through the polymer wall to cause the polymer after the foaming to shrink, to cause the cell shape to be gradually deformed and to cause the cells to become small, resulting in not obtaining a sufficient expansion ratio.

By contrast, a proposal is made in which a thermoplastic resin composition having an ultraviolet curable resin added therein is used as a raw material, and the ultraviolet curable resin is cured by a crosslinked structure after foaming (see Patent Literature 2).

Citation List

Patent Literature

Patent Literature 1: Japanese Patent Laid-Open No. H10-168215
Patent Literature 2: Japanese Patent Laid-Open No. 2009-13397

Summary of Invention

Technical Problem

However, since an ultraviolet curable resin usually has a high reactivity, the control of the reaction is difficult in handling of the resin in some cases. Particularly in the case of using an extruder in order to foam continuously, and under the condition of treatment in a high shearing field and a high-temperature atmosphere, the ultraviolet curable resin specifically undergoes the curing reaction in some cases. Additionally, if foaming is carried out using an inert gas such as nitrogen or carbon dioxide, since there is no inhibitory element of the radical polymerization reaction by oxygen, radicals due to heat and mechanical shearing are not trapped, causing the reaction to be promoted in some cases.

Therefore, an object of the present invention is to provide a thermoplastic resin foam being excellent in strength, flexibility, cushioning properties, strain recovery and the like, particularly being low in the shrinkage of the cell structure due to the resilience of the resin, and being good in productivity.

Another object of the present invention is to provide a process for producing a thermoplastic resin foam which can produce, with good productivity, the thermoplastic resin foam being excellent in strength, flexibility, cushioning properties, strain recovery and the like, particularly being low in the shrinkage of the cell structure due to the resilience of the resin.

Solution to Problem

As a result of exhaustive studies to achieve the above-mentioned objects, the present inventors have found that in a thermoplastic resin foam obtained from a thermoplastic resin composition containing a thermoplastic elastomer and an active energy-ray curable compound, the incorporation of a radical trapping agent into the thermoplastic resin composition serving as a raw material can improve the processing stability in molding in a production step of the thermoplastic resin foam, and this finding has led to the completion of the present invention.

That is, the present invention provides a thermoplastic resin foam obtained from a thermoplastic resin composition containing a thermoplastic elastomer, an active energy-ray curable compound and a radical trapping agent.

The present invention further provides a thermoplastic resin foam obtained from a thermoplastic resin composition containing a thermoplastic elastomer, an active energy-ray curable compound, a thermal crosslinking agent and a radical trapping agent.

The present invention further provides the thermoplastic resin foam obtained by forming a foamed structure obtained by foam molding the thermoplastic resin composition, and thereafter irradiating the foamed structure with an active energy ray.

The present invention further provides the thermoplastic resin foam wherein a blowing agent used in foam molding a thermoplastic resin composition is carbon dioxide or nitrogen.

The present invention further provides the thermoplastic resin foam wherein a blowing agent used in foam molding a thermoplastic resin composition is a fluid in a supercritical state.

The present invention further provides the thermoplastic resin foam wherein the thermoplastic elastomer has a reactive functional group.

The present invention further provides the thermoplastic resin foam wherein the thermoplastic resin composition contains 0.05 to 10 parts by weight of the radical trapping agent based on 100 parts by weight of the thermoplastic elastomer.

The present invention further provides the thermoplastic resin foam wherein the radical trapping agent is a phenolic or amine-based antioxidant or antiaging agent.

The present invention still further provides a process for producing a thermoplastic resin foam, which includes foam molding a thermoplastic resin composition containing a thermoplastic elastomer, an active energy-ray curable compound and a radical trapping agent to thereby form a foamed structure, and thereafter irradiating the foamed structure with an active energy ray to thereby form a crosslinked structure by the active energy-ray curable compound.

The present invention still further provides a process for producing a thermoplastic resin foam, which includes foam molding a thermoplastic resin composition containing a thermoplastic elastomer, an active energy-ray curable compound, a thermal crosslinking agent and a radical trapping agent to thereby form a foamed structure, thereafter irradiating the foamed structure with an active energy ray to thereby form a crosslinked structure by the active energy-ray curable compound, and further heating the resultant to thereby form a crosslinked structure by the thermal crosslinking agent.

The present invention further provides the process for producing a thermoplastic resin foam wherein a blowing agent used in foam molding a thermoplastic resin composition is carbon dioxide or nitrogen.

The present invention further provides the process for producing a thermoplastic resin foam wherein a blowing agent used in foam molding a thermoplastic resin composition is a fluid in a supercritical state.

The present invention still further provides a thermoplastic resin composition wherein the thermoplastic resin composition contains a thermoplastic elastomer, an active energy-ray curable compound and a radical trapping agent, and is used for forming a thermoplastic resin foam.

Advantageous Effects of Invention

According to the thermoplastic resin foam according to the present invention, since a radical trapping agent is blended in a thermoplastic resin composition serving as a raw material, the processing stability in molding in a production step is good, and the thermoplastic resin foam is excellent in strength, flexibility, cushioning properties, strain recovery and the like, particularly is low in the shrinkage of the cell structure due to the resilience of the resin, and is excellent in productivity.

According to the process for producing a thermoplastic resin foam according to the present invention, since a radical trapping agent is blended in a thermoplastic resin composition serving as a raw material, the processing stability in molding in a production step can be improved, and the thermoplastic resin foam can be produced which is excellent in strength, flexibility, cushioning properties, strain recovery and the like, particularly is low in the shrinkage of the cell structure due to the resilience of the resin, and is excellent in productivity.

Description of Embodiments

In the present invention, a thermoplastic resin foam is obtained from a thermoplastic resin composition containing a thermoplastic elastomer, an active energy-ray curable compound and a radical trapping agent. That is, a thermoplastic resin foam is obtained by foam molding a thermoplastic resin composition containing a thermoplastic elastomer, an active energy-ray curable compound and a radical trapping agent.

Particularly in the present invention, in order to obtain a thermoplastic resin foam being excellent in strength, flexibility, cushioning properties, strain recovery and the like, and particularly being low in the shrinkage of the cell structure due to the resilience of the resin, it is preferable that the thermoplastic resin foam is obtained by foam molding a thermoplastic resin composition serving as a raw material, and then irradiating the resultant with an active energy ray. This is because if at least an active energy ray irradiation is carried out to form a crosslinked structure in a foam, the compressive strain recovery of the foam can be enhanced.

Therefore, in the present invention, it is preferable that a thermoplastic resin foam is obtained, for example, by foam molding a thermoplastic resin composition containing a thermoplastic elastomer, an active energy-ray curable compound and a radical trapping agent to thereby form a foamed structure, and thereafter irradiating the foamed structure with an active energy ray to thereby form a crosslinked structure by the active energy-ray curable compound.

The "foamed structure", in the case where the thermoplastic resin foam according to the present invention is one having a crosslinked structure, refers to a foam obtained by foam molding a thermoplastic resin composition, and the foam before the formation of the crosslinked structure.

(Thermoplastic resin composition)

In the present invention, a thermoplastic resin composition is a composition serving as a raw material of a thermoplastic resin foam, and contains at least a thermoplastic elastomer, an active energy-ray curable compound and a radical trapping agent as main components.

The thermoplastic resin composition specifically includes a composition containing, at least, a thermoplastic elastomer, an active energy-ray curable compound and a radical trapping agent, and a composition containing, at least, a thermoplastic elastomer, an active energy-ray curable compound, a thermal crosslinking agent and a radical trapping agent.

A thermoplastic elastomer (thermoplastic resin) contained as a main component in such a thermoplastic resin composition is not especially limited as long as being one having rubber elasticity at normal temperature, but examples thereof include acrylic thermoplastic elastomers, urethanic thermoplastic elastomers, styrenic thermoplastic elastomers, polyesteric thermoplastic elastomers, polyamide-based thermoplastic elastomers and polyolefinic thermoplastic elastomers. Above all, acrylic thermoplastic elastomers and urethanic thermoplastic elastomers are preferable. The thermoplastic resin composition may contain only one thermoplastic elastomer, or two or more thermoplastic elastomers.

The acrylic thermoplastic elastomer is an acrylic polymer (homopolymer or copolymer) using one or two or more acrylic monomers as a monomer component, and is preferably one having a low glass transition temperature (for example, one having a glass transition temperature of 0°C or lower).

The acrylic monomer is preferably an alkyl acrylate ester having a straight-chain, branched-chain or cyclic alkyl group. Examples of such an alkyl acrylate ester include ethyl acrylate (EA), butyl acrylate (BA), 2-ethylhexyl acrylate (2-EHA), isooctyl acrylate, isononyl acrylate, propyl acrylate, isobutyl acrylate, hexyl acrylate and isobornyl acrylate (IBXA).

Since such an acrylic monomer (particularly an alkyl acrylate ester described above) is used as a main monomer component for an acrylic thermoplastic elastomer, it is important that the proportion of the acrylic monomer accounts for, for example, 50% by weight or more (preferably 70% by weight or more) of the whole monomer components forming the acrylic thermoplastic elastomer.

In the case where the acrylic thermoplastic elastomer is a copolymer, as required, a monomer component copolymerizable with the alkyl acrylate ester may be used as a monomer component. In the present application, a "monomer component copolymerizable with an alkyl acrylate ester" is referred to as "another monomer component" in some cases. The another monomer component may be used singly or in combinations of two or more.

As such another monomer component, a functional group-containing monomer copolymerizable with the acrylic monomer as a main component is preferably used.

Here, the functional group-containing monomer is a monomer component forming a thermoplastic elastomer, and is a monomer providing a functional group reactive with a functional group in a thermal crosslinking agent described later, in a thermoplastic elastomer obtained by copolymerization with a main monomer component. In the present application, a "functional group which a thermoplastic elastomer has and which is reactive with a functional group in a thermal crosslinking agent described later" is referred to as a "reactive functional group" in some cases.

That is, in the present invention, in the case where a crosslinked structure by a thermal crosslinking agent is formed in a foam, a thermoplastic elastomer incorporated in a thermoplastic resin composition as a raw material is preferably a thermoplastic elastomer having a reactive functional group.

Examples of the functional group-containing monomer which is a monomer component forming an acrylic thermoplastic elastomer, and which is copolymerizable with the acrylic monomer include carboxyl group-containing monomers such as methacrylic acid (MAA), acrylic acid (AA) and itaconic acid (IA); hydroxyl group-containing monomers such as hydroxyethyl methacrylate (HEMA), 4-hydroxybutyl acrylate (4HBA) and hydroxypropyl methacrylate (HPMA); amino group-containing monomers such as dimethylaminoethyl methacrylate (DM); amide group-containing monomers such as acrylamide (AM) and methylolacrylamide (N-MAN); epoxy group-containing monomers such as glycidyl methacrylate (GMA); acid anhydride group-containing monomers such as maleic anhydride; and cyano group-containing monomers such as acrylonitrile (AN). Above all, carboxyl group-containing monomers such as methacrylic acid (MAA) and acrylic acid (AA), hydroxyl group-containing monomers such as 4-hydroxybutyl acrylate (4HBA), and cyano group-containing monomers such as acrylonitrile (AN) are preferable because these can easily be crosslinked; and acrylic acid (AA), 4-hydroxybutyl acrylate (4HBA), acrylonitrile (AN) and the like are especially preferable.

The amount of the functional group-containing monomer to be used is, for example, 0.5 to 25.0% by weight (preferably 1.0 to 20.0% by weight) based on the whole monomer components forming an acrylic thermoplastic elastomer. If the amount exceeds 25.0% by weight, the reaction is caused excessively and there arises a risk of gelation. By contrast, with less than 0.5% by weight, the crosslinking density is too low and the characteristics of foams are reduced in some cases.

Examples of another monomer component (comonomer) which is a monomer component forming an acrylic thermoplastic elastomer and is one other than the functional group-containing monomer include vinyl acetate (VAc), styrene (St), methyl methacrylate (MMA), methyl acrylate (MA) and methoxyethyl acrylate (MEA). Above all, methoxyethyl acrylate (MEA) is preferable from the viewpoint of cold resistance.

The amount of such a comonomer to be used is, for example, 0 to 50% by weight (preferably 0 to 30% by weight) based on the whole monomer components forming an acrylic thermoplastic elastomer. If the amount exceeds 50% by weight, characteristics are likely to decrease with days, which is not preferable.

As a urethanic thermoplastic elastomer as a suitable thermoplastic elastomer contained as a main component in a thermoplastic resin composition, any resin can be used which is obtained by the urethanization reaction of an isocyanate compound and a polyol compound, and is not especially limited. Further a urethanic thermoplastic elastomer having a reactive functional group may be used.

Examples of the isocyanate compound include diisocyanate compounds such as tolylene diisocyanate, diphenylmethane diisocyanate, hexamethylene diisocyanate, naphthalene diisocyanate, isophorone diisocyanate and xylene diisocyanate. Above all, diphenylmethane diisocyanate, hexamethylene diisocyanate and the like are preferable. The isocyanate compound may be used singly or in combinations of two or more.

Examples of the polyol compound include polyesteric polyol compounds obtained by the condensation reaction of a polyhydric alcohol such as ethylene glycol, propylene glycol, butanediol, butenediol, hexanediol, pentanediol, neopentyldiol and pentanediol with an aliphatic dicarboxylic acid such as adipic acid, sebacic acid, azelaic acid and maleic acid, or an aromatic dicarboxylic acid such as terephthalic acid and isophthalic acid; polyetheric polyol compounds such as polyethylene ether glycol, polypropylene ether glycol, polytetramethylene ether glycol and polyhexamethylene ether glycol; lactone-based polyol compounds such as polycaprolactone glycol, polypropiolactone glycol and polyvalerolactone glycol; and polycarbonate-based polyol compounds obtained by the dealcoholization reaction of a polyhydric alcohol such as ethylene glycol, propylene glycol, butanediol, pentanediol, octanediol and nonanediol with diethylene carbonate, dipropylene carbonate or the like. Low-molecular weight diols such as polyethylene glycol may be used. Above all, polyesteric polyol compounds, polyetheric polyol compounds and the like are preferable. The polyol compound may be used singly or in combinations of two or more.

A urethanic thermoplastic elastomer having a reactive functional group can be obtained, for example, by a process of reserving an isocyanate group in a polymer by blending a polyol compound with an isocyanate compound of an amount excessive to an equimolar amount thereof in the polymerization.

In the present invention, an active energy-ray curable compound which a thermoplastic resin composition as a raw material contains is not especially limited as long as being a compound which is cured by irradiation of an active energy ray, but is preferably an ultraviolet curable compound which is cured by irradiation of an ultraviolet ray. The active energy-ray curable compound may be used singly or in combinations of two or more.

An active energy-ray curable compound (particularly an ultraviolet curable compound) is preferably an unsaturated compound which is nonvolatile and is a low-molecular weight substance having a weight-average molecular weight of 10,000 or lower. In the present application, an "unsaturated compound which is nonvolatile and is a low-molecular weight substance having a weight-average molecular weight of 10,000 or lower" is referred to as a "polymerizable unsaturated compound" in some cases.

In the present invention, if a thermoplastic resin composition contains an active energy-ray curable compound, irradiation of a foamed structure obtained by foam molding the thermoplastic resin composition with an active energy ray can cause the active energy-ray curable compound to be reacted (cured) to thereby form a crosslinked structure. Thereby, the shape fixability of a thermoplastic resin foam is more improved, and the deformation and the shrinkage with time of a cell structure in the thermoplastic resin foam can be prevented. The thermoplastic resin foam having such a crosslinked structure is excellent also in the strain recovery when being compressed, and can maintain a high expansion ratio in foaming. The strain recovery when the thermoplastic resin foam is compressed at a high temperature is also excellent.

Specific examples of the polymerizable unsaturated compound include esterified substances of (meth)acrylic acid and a polyhydric alcohol, such as phenoxypolyethylene glycol (meth) acrylate, s-caprolactone (meth)acrylate, polyethylene glycol di(meth)acrylate, polypropylene glycol di(meth)acrylate, 1,4-butanediol di(meth)acrylate, tetraethylene glycol di(meth)acrylate, 1,6-hexanediol di(meth)acrylate, trimethylolpropane tri(meth)acrylate, tetramethylolmethane tetra(meth)acrylate, pentaerythritol tri(meth)acrylate, pentaerythritol tetra(meth)acrylate and neopentylglycol di(meth)acrylate, polyfunctional polyester acrylates, urethane (meth)acrylates, polyfunctional urethane acrylates, epoxy (meth)acrylates, and oligoester (meth)acrylates. The polymerizable unsaturated compound may be a monomer, or an oligomer. The "(meth)acryl" used in the present invention refers to the "acryl and/or methacryl", and other derivative terms also have the similar definition.

The amount of an active energy-ray curable compound to be blended in a thermoplastic resin composition is not especially limited as long as a crosslinked structure is formed by irradiation of a foamed structure with an active energy ray, but for example, in the case of using the polymerizable unsaturated compound as an active energy-ray curable compound, the amount is 3 to 200 parts by weight (preferably 5 to 150 parts by weight) based on 100 parts by weight of a thermoplastic elastomer. If the amount of an active energy-ray curable compound to be blended is too large (for example, if the amount of the polymerizable unsaturated compound to be blended exceeds 200 parts by weight based on 100 parts by weight of a thermoplastic elastomer), the hardness of a thermoplastic resin foam becomes high, and the cushioning properties decrease in some cases. By contrast, if the amount of an active energy-ray curable compound to be blended is too small (for example, if the amount of the polymerizable unsaturated compound to be blended is smaller than 3 parts by weight based on 100 parts by weight of a thermoplastic elastomer), a high expansion ratio in a thermoplastic resin foam cannot be maintained in some cases.

Further in the present invention, a thermoplastic resin composition serving as a raw material of a thermoplastic resin foam contains a radical trapping agent. The radical trapping agent refers to a compound capable of trapping free radicals causing a radical polymerization reaction, or a mixture containing the compound, and for example, an antioxidant or antiaging agent can be used. The radical trapping agent may be used singly or two or more thereof may be used concurrently.

In the present invention, use of a radical trapping agent can improve the processing stability in molding. The reason is not clear, but may be as follows. In a thermoplastic resin composition, depending on the molding condition, the reaction of an active energy-ray curable compound in the thermoplastic resin composition is promoted in some cases. Although this is presumed to be because if a molecular chain of a thermoplastic elastomer is cleaved by a mechanical or thermal action, radicals of the cleaved resin promotes curing of the active energy-ray curable compound, blending a radical trapping agent can suppress such cleavage of the molecular chain.

Particularly in the case where an inert gas such as nitrogen or carbon dioxide described later is used as a blowing agent used for foam molding a thermoplastic resin composition, there is no inhibitory element of the radical polymerization reaction, and radicals are hardly deactivated. Also from this, it is important to use a radical trapping agent.

In the present invention, a radical trapping agent also acts as a heat-resisting stabilizer by trapping radicals in a thermoplastic resin composition.

Examples of the antioxidant and the antiaging agent used as a radical trapping agent include the following.

Examples of the antioxidant include phenolic antioxidants such as hindered phenolic antioxidants, and amine-based antioxidants such as hindered amine-based antioxidants.

Examples of the hindered phenolic antioxidant include pentaerythritol tetrakis[3-(3,5-di-tert-butyl-4-hydroxyphenyl) propionate] (trade name: "Irganox 1010", made by Ciba Japan K.K.), octadecyl-3-(3,5-di-tert-butyl-4-hydroxyphenyl) propionate (trade name: "Irganox 1076", made by Ciba Japan K.K.), 4,6-bis(dodecylthiomethyl)-o-cresol (trade name: "Irganox 1726", made by Ciba Japan K.K.), triethylene glycol bis[3-(3-tert-butyl-5-methyl-4-hydroxyphenyl) propionate] (trade name: "Irganox 245", made by Ciba Japan K.K.), bis(2,2,6,6-tetramethyl-4-piperidinyl) sebacate (trade name: "TINUVIN 770", made by Ciba Japan K.K.), and a polycondensate of dimethyl succinate and 4-hydroxy-2,2,6,6-tetramethyl-1-piperidineethanol (dimethyl succinate-1-(2-hydroxyethyl)-4-hydroxy-2,2,6,6-tetramethylpiperidine polycondensate) (trade name: "TINUVIN 622", made by Ciba Japan K.K.). Above all, from the viewpoint of the processing stability in molding, and the curability in the activity energy ray irradiation, preferable are triethylene glycol bis[3-(3-tert-butyl-5-methyl-4-hydroxyphenyl) propionate] (trade name: "Irganox 245", made by Ciba Japan K.K.), pentaerythritol tetrakis[3-(3,5-di-tert-butyl-4-hydroxyphenyl) propionate] (trade name: "Irganox 1010", made by Ciba Japan K.K.), and the like.

The hindered amine-based antioxidant is not especially limited, but preferable are bis(1,2,2,6,6-pentamethyl-4-piperidyl) sebacate (methyl) (trade name: "TINUVIN 765", made by Ciba Japan K.K.), bis(1,2,2,6,6-pentamethyl-4-piperidyl)[[3,5-bis(1,1-dimethylethyl)-4-hydroxyphenyl]methyl]butyl malonate (trade name: "TINUVIN 765", made by Ciba Japan K.K.), and the like.

Examples of the antiaging agent include phenolic ones and amine-based ones.

Examples of the phenolic antiaging agent include commercially available ones such as "Sumilizer GM" by trade name (made by Sumitomo Chemical Co., Ltd.) and "Sumilizer GS" by trade name (made by Sumitomo Chemical Co., Ltd.).

Examples of the amine-based antiaging agent include 4,4'-bis($\alpha,\alpha$-dimethylbenzyl)diphenylamine (trade name: "Nocrac CD", made by Ouchi Shinko Chemical Industrial Co., Ltd., trade name: "Naugard 445", made by Crompton Corp.), N,N'-diphenyl-p-phenylenediamine (trade name: "Nocrac DP", made by Ouchi Shinko Chemical Industrial Co., Ltd.), and p-(p-toluenesulfonylamide)diphenylamine (trade name: "Nocrac TD", made by Ouchi Shinko Chemical Industrial Co., Ltd.). Above all, from the viewpoint of the processing stability in molding, and the curability in the activity energy ray irradiation, preferable are 4,4'-bis($\alpha,\alpha$-dimethylbenzyl)diphenylamine (trade name: "Naugard 445" made by Crompton Corp.), and the like.

In the present invention, the content of a radical trapping agent in a thermoplastic resin composition is not especially limited, but is preferably 0.05 to 10 parts by weight, and more preferably 0.1 to 10 parts by weight, based on 100 parts by weight of a thermoplastic elastomer. If the content is lower than 0.05 parts by weight, since the amount to be added is small, radicals generated during the production cannot be sufficiently trapped in some cases. By contrast, if the content exceeds 10 parts by weight, problems including the following arise in some cases: foaming faults occur when a resin foam is produced from a thermoplastic resin composition, and a radical trapping agent added bleeds on the surface of a foam obtained, and other problems.

Further in the present invention, a thermoplastic resin composition may contain a photopolymerization initiator. If a photopolymerization initiator is contained, in the case where an active energy-ray curable compound is caused to react to thereby form a crosslinked structure, the crosslinked structure is easily formed. The photopolymerization initiator may be used singly or in combinations of two or more.

The photopolymerization initiator is not especially limited, and various types thereof can be used. Examples thereof include benzoin etheric photopolymerization initiators such as benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether; acetophenone-based photopolymerization initiators such as 2,2-diethoxyacetophenone, 2,2-dimethoxy-2-phenyl-lacetophenone, 1-hydroxycyclohexyl phenyl ketone, 4-phenoxydichloroacetophenone and 4-t-butyl-dichloroacetophe-none; $\alpha$-ketolic photopolymerization initiators such as 2-methyl-2-hydroxypropiophenone and 1-[4-(2-hydroxyethyl)-phenyl]-2-hydroxy-2-methylpropan-1-one; aromatic sulfonyl chloride-based photopolymerization initiators such as 2-naphthalene sulfonyl chloride; photoactive oxime-based photopolymerization initiators such as 1-phenyl-1,1-propanedione-2-(o-ethoxycarbonyl)-oxime; benzoin-based photopolymerization initiators such as benzoin; benzil-based photopolymerization initiators such as benzil; benzophenone-based photopolymerization initiators such as benzophenone, benzoylbenzoic acid, 3,3'-dimethyl-4-methoxybenzophenone, polyvinylbenzophenone and $\alpha$-hydroxycyclohexyl phenyl ketone; ketalic photopolymerization initiators such as benzyl dimethyl ketal; thioxanthone-based photopolymerization initiators such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone and dodecylthioxanthone; $\alpha$-aminoke-tone-based photopolymerization initiators such as 2-methyl-1-[4-(methylthio)phenyl]-2-morpholinopropan-1-one and 2-benzyl-2-dimethylamino-1-(4-morpholinophenyl)-butanone-1; and acylphosphine oxide-based photopolymerization initiators such as 2,4,6-trimethylbenzoyldiphenylphosphine oxide and bis(2,4,6-trimethylbenzoyl)-phenylphosphine oxide.

The amount of a photopolymerization initiator to be used is not especially limited, but can be selected, for example, from the range of 0.01 to 5 parts by weight (preferably 0.2 to 4 parts by weight) based on 100 parts by weight of a thermoplastic elastomer in a thermoplastic resin composition.

Further in the present invention, a thermal crosslinking agent may be contained in a thermoplastic resin composition. The thermal crosslinking agent, in the case where a thermoplastic elastomer in a thermoplastic resin composition has a reactive functional group, can react with the reactive functional group to thereby form a crosslinked structure. The formation of such a crosslinked structure is advantageous in terms of the improvement in the shape fixability of a thermoplastic resin foam, the prevention of deformation and shrinkage with time of the cell structure and the strain recovery. The thermal crosslinking agent may be used singly or in combinations of two or more.

Examples of such a thermal crosslinking agent include polyisocyanates such as diphenylmethane diisocyanate, tolylene diisocyanate and hexamethylene diisocyanate; and polyamines such as hexamethylenediamine, triethylenetetramine, tetraethylenepentamine, hexamethylenediamine carbamate, N,N'-dicinnamylidene-1,6-hexanediamine, 4,4'-methylenebis(cyclohexylamine) carbamate and 4,4'-(2-chloroaniline).

Such a thermal crosslinking agent can be used by being suitably modulated. The amount of the thermal crosslinking agent to be used is not especially limited, but is usually about 0.01 to 10 parts by weight (preferably 0.05 to 5 parts by weight) based on 100 parts by weight of a thermoplastic elastomer in a thermoplastic resin composition.

A thermal crosslinking agent is safely blended in a thermoplastic elastomer (thermoplastic resin) having a reactive functional group, and may be used simultaneously with a thermoplastic elastomer having a reactive functional group, a thermoplastic elastomer having no reactive functional group and a crosslinking agent having a reactive functional group.

In the present invention, a thermoplastic resin composition forming a thermoplastic resin foam may further contain a powder particle. The powder particle can exhibit a function as a foam nucleating agent in foam molding. Therefore, blending the powder particle can provide a thermoplastic resin foam in a good foamed state. Examples of powder particles usable are powdery talc, silica, alumina, zeolite, calcium carbonate, magnesium carbonate, barium sulfate, zinc oxide, titanium oxide, aluminum hydroxide, magnesium hydroxide, mica and clay such as montmorillonite, and carbon particles, glass fibers and carbon tubes. The powder particle may be used singly or in combinations of two or more.

In the present invention, as the powder particle, a powdery particle having an average particle diameter (size) of about 0.1 to 20 $\mu$m can suitably be used. With the average particle diameter of the powder particle of smaller than 0.1 $\mu$m, the powder particle does not sufficiently function as a nucleating agent in some cases; and if the particle diameter exceeds 20 $\mu$m, the powder particle becomes a cause of degassing in foam molding in some cases, which are not preferable.

The amount of a powder particle to be blended is not especially limited, but can suitably be selected from the range of 5 to 150 parts by weight (preferably 10 to 120 parts by weight) based on 100 parts by weight of a thermoplastic elastomer. If the amount of a powder particle to be blended is smaller than 5 parts by weight based on 100 parts by weight of a thermoplastic elastomer, it becomes difficult to obtain a uniform foam; and by contrast, if the amount exceeds 150 parts by weight, the viscosity of a thermoplastic resin composition remarkably rises and the degassing in foam molding is caused, resulting in a risk of damaging foaming characteristics.

Since a thermoplastic resin foam is constituted of a thermoplastic elastomer, the thermoplastic resin foam has the property of being easily flammable (of course, a drawback as well). Therefore, into a thermoplastic resin foam, as the powder particle particularly in applications such as electric and electronic device applications, to which the flame retardancy is indispensably imparted, a powder particle having flame retardancy (for example, various types of powdery flame retardants and the like) may be blended. A flame retardant can be used with a powder particle other than a flame retardant.

A powdery flame retardant is suitably an inorganic one. The inorganic flame retardant may be, for example, a bromine-based one, a chlorine-based one, a phosphorus-based one or an antimony-based one; but since the chlorine-based one and the bromine-based one have a problem of generating gas components being harmful to human bodies and corrosive to devices, and the phosphorus-based one and the antimony-based one have a problem of harmfulness and explosiveness, non-halogen and non-antimony-based flame retardants can suitably be used. Examples of the non-halogen and non-antimony-based flame retardant include aluminum hydroxide, magnesium hydroxide, and hydrated metal compounds such as a hydrate of magnesium oxide/nickel oxide and a hydrate of magnesium oxide/zinc oxide. The hydrate metal oxide may be surface treated. The flame retardant may be used singly or in combinations of two or more.

In the case of using a flame retardant, the amount thereof to be used is not especially limited, and can suitably be selected from the range of 5 to 150% by weight (preferably 10 to 120% by weight) based on the total amount of a thermoplastic resin composition. If the amount of a flame retardant to be used is too small, the flame retardancy effect becomes small; and conversely, if the amount is too large, it becomes difficult to obtain a highly foamed foam.

Further in the present invention, as required, various types of additives may be blended in a thermoplastic resin composition. The kind of the additive is not especially limited, and various types of additives usually used in foam molding can be used. Specific examples of the additive include cell nucleating agents, crystal nucleating agents, plasticizers, lubricants, colorants (pigments, dyes and the like), ultraviolet absorbents, fillers, reinforcing agents, antistatic agents, surfactants, tension modifiers, shrinkage preventive agents, fluidity modifiers, clay, vulcanizing agents, surface treating agents, and various forms of flame retardants other than powdery ones. The amount of such additives to be blended is not especially limited, and can be an amount to be blended used in usual production of thermoplastic resin foams. The amount to be blended may suitably be adjusted within the range of not inhibiting the development of desired good characteristics of a thermoplastic resin form such as strength, flexibility and strain recovery.

In the present invention, a thermoplastic resin composition can be obtained, for example, by mixing, kneading, melt mixing or otherwise a thermoplastic elastomer, an active energy-ray curable compound, a radical trapping agent, a thermal crosslinking agent, a photopolymerization initiator, a powder particle, other additives, and the like as required, although not being especially limited.

(Production process of a thermoplastic resin foam)

In the present invention, a thermoplastic resin foam is obtained from the thermoplastic resin composition (for example, a thermoplastic resin composition containing, at least, a thermoplastic elastomer, an active energy-ray curable compound and a radical trapping agent, and a thermoplastic resin composition containing, at least, a thermoplastic elastomer, an active energy-ray curable compound, a thermal crosslinking agent and a radical trapping agent).

More suitably in the present invention, a thermoplastic resin foam is obtained by foam molding the thermoplastic resin composition to thereby form a foamed structure, and thereafter irradiating the foamed structure with an active energy ray. It is preferable that a foamed structure is obtained by impregnating a thermoplastic resin composition with a blowing agent, and thereafter subjecting the resultant to a pressure-reduction step to be thereby foam molded.

More in detail in the present invention, it is preferable that a thermoplastic resin foam is obtained by foam molding a thermoplastic resin composition containing a thermoplastic elastomer, an active energy-ray curable compound and a radical trapping agent to thereby form a foamed structure, and thereafter irradiating the foamed structure with an active energy ray to thereby form a crosslinked structure by the active energy-ray curable compound. It is also preferable that a thermoplastic resin foam is obtained by foam molding a thermoplastic resin composition containing a thermoplastic elastomer, an active energy-ray curable compound, a thermal crosslinking agent and a radical trapping agent to thereby form a foamed structure, thereafter irradiating the foamed structure with an active energy ray to thereby form a crosslinked structure by the active energy-ray curable compound, and further heating the resultant to thereby form a crosslinked structure by the thermal crosslinking agent.

In the present invention, a blowing agent used in foam molding a thermoplastic resin composition is not especially limited as long as being a gas at normal temperature and normal pressure, and being inert to a thermoplastic elastomer (thermoplastic resin) and capable of being impregnated. In the present application, a "gas inert to a thermoplastic elastomer and capable of being impregnated" is referred to as an "inert gas" in some cases.

Examples of the inert gas include rare gases (for example, helium, argon and the like), carbon dioxide, nitrogen and air. These gases may be mixed and used. Above all, carbon dioxide or nitrogen is suitably used in that these exhibit a large amount to be impregnated and a high impregnation speed in a thermoplastic elastomer used as a material of a foam.

Particularly in the present invention, in the case of using an inert gas such as nitrogen or carbon dioxide as described above as a blowing agent used in foam molding a thermoplastic resin composition, a radical trapping agent needs to be contained as an essential component in the thermoplastic resin composition. This is because in the case of using an inert gas such as nitrogen or carbon dioxide, since the inhibition of the radical polymerization reaction by oxygen is not caused naturally, radicals are hardly deactivated even if the radicals are generated, and then, the generated radicals have a risk of causing a specific curing reaction of an active energy-ray curable compound. The active energy-ray curable compound is generally rich in reactivity, and sometimes generates radicals by heat and mechanical shearing when a thermoplastic resin composition is foam molded.

Further from the viewpoint of raising the impregnation speed in a thermoplastic elastomer, a blowing agent is preferably a high-pressure gas (particularly a high-pressure carbon dioxide gas or a high-pressure nitrogen gas), and more preferably a fluid in a supercritical state (particularly carbon dioxide gas in a supercritical state or nitrogen gas in a supercritical state). In the supercritical state, the solubility of the gas to a thermoplastic elastomer increases, resulting in allowing high-concentration mixing. Since the gas can be impregnated in a high concentration as described above when the pressure is rapidly descended after the impregnation, the generation of cell nuclei becomes much and the density of cells growing from the cell nuclei becomes high even if the porosity is the same, thus obtaining fine cells. Carbon dioxide has a critical temperature of 31°C and a critical pressure of 7.4 MPa.

When a foamed structure is formed by foam molding a thermoplastic resin composition, the formation may be carried out by a batch system in which the thermoplastic resin composition is molded previously into a suitable shape such as a sheet shape to make an unfoamed resin molded article (unfoamed molded material); thereafter, the unfoamed resin molded article is impregnated with a blowing agent (particularly a high-pressure gas or a fluid in a supercritical state); and the pressure is released to thereby cause the unfoamed resin molded article to be foamed, or may be carried out by a continuous system in which the thermoplastic resin composition is kneaded under pressure together with a blowing agent (particularly a high-pressure gas or a fluid in a supercritical state); and the pressure is released simultaneously with molding to thus simultaneously carry out the molding and the foaming.

A foamed structure may be thus obtained by molding a thermoplastic resin composition to obtain an unfoamed resin molded article, thereafter impregnating the unfoamed resin molded article with a blowing agent, and subjecting the resultant to a pressure-reduction step to be thereby foam molded. Alternatively, a foamed structure may be obtained by impregnating a melted thermoplastic resin composition with a blowing agent in a pressurized state, and thereafter molding the resultant in pressure reduction.

Specific examples of processes for producing an unfoamed resin molded article when a foamed structure is produced by a batch system include a process of molding a thermoplastic resin composition (a composition for a foamed structure) using an extruder such as a single-screw extruder, a twin-screw extruder, a process in which a thermoplastic resin composition is homogeneously kneaded using a kneading machine equipped with blades of for example a roller, cam, kneader or Banbury type, and then, press molded into a predetermined thickness using a hot plate press or the like, and a process of molding by using an injection molding machine. The molding may be carried out by any suitable process of obtaining a molded article having a desired shape and thickness. Cells are formed in the unfoamed resin molded article by subjecting the unfoamed resin molded article to a gas-impregnation step of putting the unfoamed resin molded article (the molded article from the thermoplastic resin composition) thus obtained in a pressure-resistant vessel (a high-pressure vessel), and injecting (introducing) a gas as a blowing agent (for example, carbon dioxide, nitrogen and the like) therein to thereby impregnating the gas in the unfoamed resin molded article under high pressure, and a pressure-reduction step of releasing the pressure (usually to the atmospheric pressure) at the time when the gas is sufficiently impregnated, and as the case may be (as required), a heating step of heating the resultant to thereby cause cell nuclei to grow. Here, instead of providing the heating step, the cell nuclei may be grown at room temperature. After the cells are caused to grown in such a way, as required, the resultant can be rapidly cooled with cold water or the like to fix the shape to thereby obtain a foamed structure. The shape of the unfoamed resin molded article is not especially limited, and may be any of a roll-, a sheet-, and a plate-shape and the like. The introduction of a gas as a blowing agent may be carried out continuously or discontinuously. Heating methods employable when cell nuclei are caused to grow are well-known or common methods including using a water bath, an oil bath, a hot roll, a hot-air oven, far infrared rays, near infrared rays and microwaves. An unfoamed resin molded article provided for foaming may be fabricated by a molding process other than extrusion, press molding or injection molding.

On the other hand, in the case of producing a foamed structure by a continuous system, the foamed structure can be produced by a kneading and impregnation step of kneading a thermoplastic resin composition (a composition for a foamed structure) using an extruder such as a single-screw extruder or a twin-screw extruder and concurrently injecting (introducing) a gas as a blowing agent (for example, carbon dioxide, nitrogen and the like), and sufficiently impregnating the gas therein under high pressure, and a molding and pressure-reduction step of extruding the thermoplastic resin composition through a die installed at the front end of the extruder to thereby release the pressure (usually, to the atmospheric pressure) to thereby carry out simultaneously the molding and the foaming. As the case may be (as required), a heating step of heating the resultant to thereby cause cells to grow may be provided. After the cells are caused to grow in such a way, as required, the resultant can be rapidly cooled with cold water or the like to fix the shape to thereby obtain a foamed structure. The kneading and impregnation step and the molding and pressure-reduction step may be carried out using an injection molding machine besides an extruder. The process may suitably be selected from processes capable of obtaining a foamed structure having a sheet-shape, a square pole-shape or other optional shape.

The amount of a blowing agent (a gas as a blowing agent) to be mixed is not especially limited, and is suitably adjusted so that a desired density and expansion ratio can be attained.

The pressure when a blowing agent is impregnated in an unfoamed resin molded article or a thermoplastic resin composition in the gas-impregnation step in the batch system and the kneading and impregnation step in the continuous system can suitably be selected in consideration of the kind, the operability and the like of a gas as the blowing agent, but the pressure is, in the case of using carbon dioxide as a blowing agent, 6 MPa or higher (for example, about 6 to 100 MPa), and preferably 8 MPa or higher (for example, about 8 to 100 MPa). In the case where the pressure is less than 6 MPa, cell growth in foaming is remarkable and the cell diameter becomes too large, and for example, disadvantages including a decrease in the dustproof effect are liable to be caused, which is not preferable. This is because, since the amount of carbon dioxide gas to be impregnated at a low pressure is relatively small as compared with that at a high pressure to thereby decrease the cell nucleus forming speed and make small the number of cell nuclei formed, the gas amount per cell conversely increases and the cell diameter becomes extremely large. Also in the pressure region less than 6 MPa, since the cell diameter and the cell density largely vary by varying the impregnation pressure only a little, the control of the cell diameter and the cell density is liable to become difficult.

The temperature when a blowing agent is impregnated in an unfoamed resin molded article or a thermoplastic resin composition in the gas-impregnation step in the batch system and the kneading and impregnation step in the continuous system, depending on the kinds of a gas as a blowing agent and a thermoplastic elastomer to be used, and the like, can be selected from a broad range, but the temperature is, for example, about 10 to 350°C, in consideration of the operability and the like. The impregnation temperature, for example, in the case where a gas as a blowing agent is impregnated in a sheet-shape unfoamed resin molded article in the batch system, is about 10 to 200°C (preferably 40 to 200°C). The temperature when a gas as a blowing agent is injected in and kneaded with a thermoplastic resin composition (a composition for a thermoplastic resin foam) in the continuous system is generally about 60 to 350°C (preferably 40 to 200°C). In the case of using carbon dioxide as a blowing agent, in order to hold the supercritical state, the temperature at impregnation (impregnation temperature) is preferably 32°C or higher (especially 40°C or higher).

The gas amount when a blowing agent is impregnated in an unfoamed resin molded article or a thermoplastic resin composition in the gas-impregnation step in the batch system and the kneading and impregnation step in the continuous system is not especially limited, but is preferably 2 to 6% by weight based on the total amount (100% by weight) of the unfoamed resin molded article or the thermoplastic resin composition.

In the pressure-reduction step, the pressure-reduction rate is not especially limited, but is preferably about 5 to 300 MPa/sec in order to provide uniform fine cells. The heating temperature in the heating step is, for example, about 40 to 250°C (preferably 60 to 250°C).

Since such a production process can produce a foamed structure having a high expansion ratio, the production process has an advantage of being capable of producing a thick foamed structure. This means an advantage to the present invention in the case where a thick resin foam is intended to be obtained. For example, in the case of producing a foamed structure by the continuous system, in order to hold the pressure in an extruder interior in the kneading and impregnation step, the gap of a die attached to the front end of the extruder needs to be made as narrow as possible (usually 0.1 to 1.0 mm). Therefore, although a thermoplastic resin foam composition extruded through a narrow gap needs to be foamed at a high expansion ratio in order to obtain a thick foamed structure, since a high expansion ratio cannot be attained conventionally, the foamed structure is limited to a thin one (for example, about 0.5 to 2.0 mm). By contrast, the production process using a gas as a blowing agent can produce continuously a foamed structure having a final thickness of 0.50 to 5.00 mm. In order to obtain such a thick foamed structure, the relative density of a foamed structure (a density after foaming/a density in an unfoamed state) is desirably 0.02 to 0.3 (preferably 0.05 to 0.25). If the relative density exceeds 0.3, foaming is insufficient; and if the relative density is less than 0.02, the strength remarkably decreases in some cases, which is not preferable.

The shape and the thickness of a foamed structure are not especially limited, and can suitably be selected according to applications of the thermoplastic resin foam. A foamed structure, after being fabricated by the production process, may be processed into various shapes and thicknesses before the irradiation of an active energy ray and the heating to form a crosslinked structure. A foamed structure preferably has the same density as that of a resin foam described later.

The thickness, the density, the relative density and the like of a foamed structure can be regulated by suitably selecting and setting, for example, operational conditions such as the temperature, pressure and time in a gas-impregnation step and a kneading and impregnation step in fabrication of the foamed structure, operational conditions such as the pressure-reduction rate, temperature and pressure in a pressure-reduction step and a molding and pressure-reduction step, and the heating temperature and the like in a heating step after the pressure-reduction or the molding and pressure-reduction, according to a blowing agent, and components of a thermoplastic elastomer (thermoplastic resin) to be used.

In the present invention, a crosslinked structure imparted to a foamed structure obtained by the above-mentioned process is formed, at least by the irradiation of the foamed structure with an active energy ray. That is, the thermoplastic resin foam according to the present invention may be obtained by foam molding a resin composition containing, at least, a thermoplastic elastomer, an active energy-ray curable compound and a radical trapping agent to thereby obtain a foamed structure, and then at least irradiating the foamed structure with an active energy ray to thereby form a crosslinked structure by the active energy-ray curable compound.

A crosslinked structure imparted to a foamed structure, in the case where a thermoplastic resin composition serving as a raw material contains a thermal crosslinking agent, is formed also by heating the foamed structure. That is, the thermoplastic resin foam according to the present invention can be obtained also by foam molding a resin composition containing, at least, a thermoplastic elastomer, an active energy-ray curable compound, a thermal crosslinking agent and a radical trapping agent to thereby obtain a foamed structure, then irradiating the foamed structure with an active energy ray to thereby form a crosslinked structure by the active energy-ray curable compound, and further heating the resultant to thereby form a crosslinked structure by the thermal crosslinking agent.

Examples of the active energy ray used for the formation of a crosslinked structure include ionization radiations such as $\alpha$ rays, $\beta$ rays, $\gamma$ rays, neutron beams and electron beams, and ultraviolet rays, and particularly ultraviolet rays and electron beams are suitable from the viewpoint of workability. The irradiation energy, the irradiation time, the irradiation method and the like of an active energy ray are not especially limited as long as a crosslinked structure can be formed by an active energy-ray curable compound. The irradiation of such an active energy ray, for example, in the case where a foamed structure has a sheet shape and ultraviolet rays are used as the active energy ray, includes irradiating one surface of the sheet-shape foamed structure with ultraviolet rays (irradiation energy: 750 mJ/cm$^2$), and thereafter again irradiating the other surface thereof with ultraviolet rays (irradiation energy: 750 mJ/cm$^2$). In the case where a foamed structure has a sheet shape and electron beams are used as the active energy ray, the irradiation involves irradiating one surface of the sheet-shape foamed structure with electron beams of an irradiation dose of 50 to 300 kGy.

The active energy ray is especially preferably electron beams from the viewpoint of providing a denser crosslinked structure by an active energy-ray curable compound.

A method of heating carried out when a crosslinked structure is formed to a foamed structure is not especially limited as long as the method can form the crosslinked structure by a thermal crosslinking agent, but include leaving the foamed structure to stand, for example, in the temperature atmosphere of 100 to 230°C (preferably 100 to 200°C, more preferably 110 to 180°C, and still more preferably 120°C to 170°C) for 1 min to 10 hours (preferably 10 min to 10 hours, more preferably 30 min to 8 hours, and still more preferably 1 hour to 5 hours). Such a temperature atmosphere can be attained, for example, by a well-known heating method (for example, a heating method using an electric heater, a heating method using an electromagnetic wave such as infrared rays, and a heating method using a water bath).

In the present invention, since a thermoplastic resin foam is obtained from a thermoplastic resin composition containing a radical trapping agent, it is presumed that even if radicals are generated, for example, by mechanical or thermal action and the like in the course of the production step, the radical trapping agent traps the radicals. This is presumed to lead to the suppression of a specific curing reaction of an active energy-ray curable compound in molding in the production step.

Therefore, in the present invention, a thermoplastic resin foam being good in the processing stability in molding in the production step, and being excellent in strength, flexibility, cushioning properties, strain recovery and the like can be productively obtained.

(Thermoplastic resin foam)

In the present invention, a thermoplastic resin foam is obtained from the thermoplastic resin composition by the production process of a thermoplastic resin foam. Since such a thermoplastic resin foam includes a thermoplastic resin composition containing a radical trapping agent, the processing stability in molding in the production step is good, and strength, flexibility, cushioning properties, strain recovery and the like are excellent and also the productivity is good. The thermoplastic resin foam further has a good shape fixability, and neither deformation nor shrinkage of a cell structure in the foam are generated with time. Particularly, the shrinkage of the cell structure due to the resilience of the resin is small, and a high expansion ratio in foaming can be maintained. Further, the strain recovery after the foam is compressed and held at a high temperature is also excellent.

The density of a thermoplastic resin foam is not especially limited, but is preferably 0.01 to 0.8 g/cm$^3$, and more preferably 0.02 to 0.2 g/cm$^3$. If the density is in this range, the thermoplastic resin foam can provide a reasonable strength and flexibility, and further develops good cushioning properties and a good strain recovery.

The density of a thermoplastic resin foam is measured by blanking the thermoplastic resin foam by a blanking blade die of 40 mm x 40 mm, and measuring the size of the blanked sample. The thickness thereof is measured by a 1/100 dial gauge whose measuring terminal has a diameter ($\phi$) of 20 mm. The volume of the blanked sample is calculated from these values. Then, the weight of the blanked sample is measured by an even balance having a smallest scale division of 0.01 g or higher. The density (g/cm$^3$) can be calculated from these values.

The thickness, the density, the relative density and the like of a thermoplastic resin foam can be regulated by suitably selecting and setting, for example, operational conditions such as the temperature, pressure and time in a gas-impregnation step and a kneading and impregnation step in fabrication of the foamed structure, operational conditions such as the pressure-reduction rate, temperature and pressure in a pressure-reduction step and a molding and pressure-reduction step, and the heating temperature and the like in a heating step after the pressure-reduction or the molding and pressure-reduction, according to a blowing agent, and components of a thermoplastic elastomer (thermoplastic resin) to be used, and can be regulated also by controlling the degree of a crosslinked structure in the thermoplastic resin foam.

The cell structure of a thermoplastic resin foam is preferably a closed cell structure or a semi-interconnecting semi-closed cell structure (a cell structure containing both a closed cell structure and an interconnecting cell structure, and the proportion is not especially limited), and is suitably a cell structure in which closed cell structure portions account for 80% or more (particularly 90% or more) in the thermoplastic resin foam.

The shape, the thickness and the like of a thermoplastic resin foam are not especially limited, and can suitably be selected according to applications and the like. The thickness can be selected, for example, from the range of about 0.1 to 20 mm (preferably 0.2 to 15 mm). The shape is, for example, a sheet-, a tape- or a film-shape or the like.

The thermoplastic resin foam according to the present invention is excellent in the strain recovery, and the strain recovery rate (50% compression set) can be determined by a method described below. A test piece is sampled from a thermoplastic resin foam, and accurately measured for the thickness. The thickness of the test piece at this time is taken to be a. The test piece is compressed to 50% of the thickness (thickness b) by using a spacer having a thickness b half the thickness of the test piece, and stored at this state for 24 hours. After 24 hours, the compression state is relieved. The thickness of the test piece is accurately measured 30 min after the relief. The thickness of the test piece at this time is taken to be c. The ratio of the recovery distance to the compressed distance is defined as a strain recovery rate (50% compression set). Strain recovery rate (50% compression set) [%] = (c - b) / (a - b) x 100

The strain recovery rate is referred to as "strain recovery rate (80°C, 50% compression set) at 30 min after the relief" in some cases.

In addition to the "strain recovery rate (80°C, 50% compression set) at 30 min after the relief", a "strain recovery rate (80°C, 50% compression set) at 24 hours after the relief" also can be determined. A method for determining the "strain recovery rate (80°C, 50% compression set) at 24 hours after the relief" is the same as "the method for determining the strain recovery rate (80°C, 50% compression set) at 30 min after the relief", except for accurately measuring the thickness of a test piece at 24 hours after the relief of the compression state.

The thermoplastic resin foam according to the present invention is very useful, for example, as internal insulators of electronic devices and the like, cushioning materials, sound insulators, heat insulators, food packaging materials, clothing materials and building materials.

Examples

Hereinafter, the present invention will be described in detail by way of Examples, but the present invention is not limited to these Examples.

(Test Evaluation 1)

In order to verify the effect of a radical trapping agent, a curability evaluation test using a batch-type mixing apparatus and a curability evaluation test using a continuous extruder were carried out. In the case where the results of the evaluation tests can be considered good, it can be considered that the radical trapping agent exhibited the effect and the processing stability in molding was good. By contrast, in the case where the evaluation tests can be considered poor, it can be considered that the radical trapping agent could not exhibit the effect and the processing stability in molding was poor.

[Curability evaluation test (evaluation using the batch system) using a batch-type mixing apparatus]

A thermoplastic resin composition previously prepared by pre-kneading is charged in a kneading machine equipped with a roller-type blade (machine name: "Labo Plastomill", made by Toyo Seiki Seisaku-sho, Ltd., mixing volume: 60 ml); and a lid for nitrogen replacement is installed on the kneading machine, and the thermoplastic resin composition is mixed at 10 rpm for 2 min. Thereafter, the rotation frequency (rotation speed) is altered to 40 rpm, and nitrogen is circulated at 5 L/min (nitrogen is made to flow in the kneading machine at 5 L/min) to replace air by nitrogen. At 8 min after the start of the nitrogen circulation, the rotation frequency is altered to 70 rpm, and a resin composition for evaluation is obtained. The oxygen gas concentration in the vessel could be checked by an oxygen monitor, and was 0.2% or lower at 5 min after the start of the nitrogen circulation.

The appearance of the resin composition for evaluation, the degree of a rise of the torque, and the gel content of the resin composition for evaluation are evaluated according to the following evaluation standards. The gel content evaluation of the resin composition for evaluation is carried out as required, and the measurement of the gel content is carried out by a method described later.

(Evaluation Standards)

Appearance: the case where no cured material is visually observed is considered good, and the case where some cured material is visually observed is considered poor.

Degree of a rise of the torque: the case where no rise of the torque with time is observed can be considered production of no cured material, and considered good; by contrast, the case where a rise of the torque with time is observed can be inferred to produce some cured material, and considered poor.

Gel content: the case where the gel content by the following measurement method is 50% by weight or lower was inferred to produce no cured material, and considered good; by contrast, the case where the gel content by the following measurement method exceeds 50% by weight is inferred to produce some cured material, and considered poor.

(Comprehensive Evaluation)

The appearance, the degree of a rise of the torque, and the gel content measured as required are comprehensively considered to carry out a final evaluation.

The case where all the items are good is comprehensively considered good; by contrast, the case where at least one item is poor is comprehensively considered poor.

[Curability evaluation test (evaluation using the continuous machine) using a continuous extruder]

A thermoplastic resin composition previously prepared by pre-kneading is charged in an extruder (machine name: "TP-type single-screw extruder TP-25", made by TPIC Co., Ltd., screw diameter: $\phi$ 20 mm, L/D: 30, screw: a root-diameter conical taper-type full flighted screw), and fed (extruded) at a rotation frequency of 50 rpm and at an amount to be fed (amount to be extruded) of 1 kg/hr. Carbon dioxide is fed at 0.2 kg/hr. No die is installed to carry out the extrusion. The appearance of the extruded material, the degree of a rise of the torque, and the gel content of the extruded material are evaluated according to the following evaluation standards. The gel content evaluation of the resin composition for evaluation is carried out as required, and the measurement of the gel content is carried out by a method described later.

(Evaluation Standards)

Appearance: the case where no cured material is visually observed is considered good, and the case where some cured material is visually observed is considered poor.

Degree of a rise of the torque: the case where no rise of the torque with time is observed can be inferred to produce no cured material, and considered good; by contrast, the case where a rise of the torque with time is observed can be inferred to produce some cured material, and considered poor.

Gel content: the case where the gel content by the following measurement method is 50% by weight or lower can be inferred to produce no cured material, and considered good; by contrast, the case where the gel content by the following measurement method exceeds 50% by weight can be inferred to produce some cured material, and considered poor.

(Comprehensive Evaluation)

The appearance, the degree of a rise of the torque, and the gel content measured as required are comprehensively considered to carry out a final evaluation.

The case where all the items can be considered to be good is comprehensively considered good; by contrast, the case where at least one item can be considered poor is comprehensively considered poor.

(Measurement of a gel content)

0.1 g (initial weight) of a sample was sampled, and packaged with a porous membrane of a polytetrafluoroethylene (PTFE); then, the package was left to stand in 50 ml of ethyl acetate at room temperature for 1 week. Thereafter, the package was taken out, and dried at 130°C for 1 hour, and the sample was weighed. The weight of the sample at this time was taken as "a weight after 1 week". Then, the gel fraction was calculated by the following expression. Gel fraction (% by weight) = (weight after 1 week) /(initial weight) x 100

(Example 1)

Evaluation using the continuous system

100 parts by weight of a thermoplastic acrylic elastomer including 85 parts by weight of butyl acrylate, 15 parts by weight of acrylonitrile and 6 parts by weight of acrylic acid was kneaded by a pressurized kneader (machine name: "TD3-10M", made by Toshin Co., Ltd., mixing volume: 3 L) at a temperature of 80°C at 30 rpm for about 2 min; thereafter, 100 parts by weight of a polyfunctional acrylate (trade name: "Aronix M8530", made by Toagosei Co., Ltd., a polyester acrylate), 50 parts by weight of magnesium hydroxide (trade name: "MGZ-1", made by Sakai Chemical Industry Co., Ltd.), and 8 parts by weight of a phenolic antiaging agent (trade name: "Sumilizer GM", made by Sumitomo Chemical Co., Ltd.) were charged, and further kneaded at 30 rpm at 80°C for about 30 min to thereby obtain a thermoplastic resin composition.

The thermoplastic resin composition was subjected to a curability evaluation test using the continuous extruder described above. The appearance of the extruded material was considered good; and the degree of a rise of the torque could be considered good. Therefore, the comprehensive evaluation was good.

(Example 2)

Evaluation using the continuous system

100 parts by weight of a thermoplastic acrylic elastomer including 85 parts by weight of butyl acrylate, 15 parts by weight of acrylonitrile and 6 parts by weight of acrylic acid, 100 parts by weight of a polyfunctional acrylate (trade name: "Aronix M8530", made by Toagosei Co., Ltd., a polyester acrylate), 3 parts by weight of bis(2,4,6-trimethylbenzoyl)-phenylphosphine oxide (trade name: "Irgacure 819", made by Ciba Japan K.K.) as a photopolymerization initiator, 1 part by weight of hexamethylenediamine (trade name: "diak No. 1", made by Du Pont K.K.) as a crosslinking agent, 50 parts by weight of magnesium hydroxide (trade name: "MGZ-1", made by Sakai Chemical Industry Co., Ltd.), and 8 parts by weight of an amine-based antiaging agent (trade name: "Naugard 445", made by Crompton Corp.) were charged in a twin-screw extruder (machine name: "2D30W2", made by Toyo Seiki Seisaku-sho, Ltd., screw diameter $\phi$: 25 mm, L/D: 30, combined use of being full flighted and mixing), and mixed at a processing temperature of 80°C at a rotation frequency of 200 rpm to thereby obtain a thermoplastic resin composition.

The thermoplastic resin composition was subjected to a curability evaluation test using the continuous extruder described above. The appearance of the extruded material was considered good; and the degree of a rise of the torque could be considered good. Therefore, the comprehensive evaluation was good.

(Example 3)

Evaluation using the batch system

100 parts by weight of a thermoplastic acrylic elastomer including 85 parts by weight of butyl acrylate, 15 parts by weight of acrylonitrile and 6 parts by weight of acrylic acid was kneaded by a pressurized kneader (machine name: "TD3-10M", made by Toshin Co., Ltd., mixing volume: 3 L) at a temperature of 80°C at 40 rpm for about 2 min; thereafter, 100 parts by weight of a polyfunctional acrylate (trade name: "Aronix M8530", made by Toagosei Co., Ltd., a polyester acrylate), and 50 parts by weight of magnesium hydroxide (trade name: "MGZ-1", made by Sakai Chemical Industry Co., Ltd.) were charged, and further kneaded at 40 rpm at 80°C for about 20 min to thereby obtain a pre-molded material.

50 g of the pre-molded material was charged in a kneading machine equipped with a roller-type blade (machine name: "Labo Plastomill", made by Toyo Seiki Seisaku-sho, Ltd., mixing volume: 60 ml); and a phenolic antioxidant (hindered phenolic antioxidant)(trade name: "Irganox 245", made by Ciba Japan K.K.) was further added in an amount of 8 parts by weight based on 100 parts by weight of the thermoplastic acrylic elastomer. Then, the mixture was mixed at 40 rpm at 80°C for 5 min so that the phenolic antioxidant agent was homogeneously mixed in the pre-molded material, to thereby obtain a thermoplastic resin composition.

The thermoplastic resin composition was subjected to a curability evaluation test using the batch-type mixing apparatus described above. The appearance of the resin composition for evaluation was considered good; and since the torque did not rise until 1,800 sec after the start of the mixing, the degree of a rise of the torque could be considered good. Therefore, the comprehensive evaluation was good.

(Example 4)

Evaluation using the continuous system

100 parts by weight of a thermoplastic acrylic elastomer including 85 parts by weight of butyl acrylate, 15 parts by weight of acrylonitrile and 6 parts by weight of acrylic acid, 100 parts by weight of a polyfunctional acrylate (trade name: "Aronix M8530", made by Toagosei Co., Ltd., a polyester acrylate), 4 parts by weight of a crosslinking agent (trade name: "Coronate HX", made by Nippon Polyurethane Industry Co., Ltd.), and 4 parts by weight of a phenolic antioxidant (hindered phenolic antioxidant, trade name: "Irganox 245", made by Ciba Japan K.K.) were charged in a twin-screw extruder (machine name: "2D30W2", made by Toyo Seiki Seisaku-sho, Ltd., screw diameter $\phi$: 25 mm, L/D: 30, combined use of being full flighted and mixing), and mixed at a processing temperature of 80°C at a rotation frequency of 200 rpm to thereby obtain a thermoplastic resin composition.

The thermoplastic resin composition was subjected to a curability evaluation test using the continuous extruder described above. The appearance of the extruded material was considered good; and the degree of a rise of the torque could be considered good. Therefore, the comprehensive evaluation was good.

(Example 5)

Evaluation using the batch system

50 g of the pre-molded material obtained in Example 3 was charged in a kneading machine equipped with a roller-type blade (machine name: "Labo Plastomill", made by Toyo Seiki Seisaku-sho, Ltd., mixing volume: 60 ml); and an amine-based antiaging agent (trade name: "Naugard 445", made by Crompton Corp.) was further added in an amount of 8 parts by weight based on 100 parts by weight of the thermoplastic acrylic elastomer. Then, the mixture was mixed at 40 rpm at 80°C for 5 min so that the amine-based antiaging agent was homogeneously mixed in the pre-molded material, to thereby obtain a thermoplastic resin composition.

The thermoplastic resin composition was subjected to a curability evaluation test using the batch-type mixing apparatus described above. The appearance of the resin composition for evaluation was considered good; and since the torque did not rise until 1,800 sec after the start of the mixing, the degree of a rise of the torque could be considered good. Therefore, the comprehensive evaluation was good.

(Example 6)

Evaluation using the continuous system

100 parts by weight of a thermoplastic acrylic elastomer including 85 parts by weight of butyl acrylate, 15 parts by weight of acrylonitrile and 6 parts by weight of acrylic acid was kneaded by a pressurized kneader (made by Toshin Co., Ltd., mixing volume: 3 L) at a temperature of 80°C at 30 rpm for about 2 min; thereafter, 100 parts by weight of a polyfunctional acrylate (trade name: "Aronix M8530", made by Toagosei Co., Ltd., a polyester acrylate), 50 parts by weight of magnesium hydroxide (trade name: "MGZ-1", made by Sakai Chemical Industry Co., Ltd.), and 8 parts by weight of an amine-based antiaging agent (trade name: "Naugard 445", made by Crompton Corp.) were charged, and further kneaded at 30 rpm at 80°C for about 40 min to thereby obtain a thermoplastic resin composition.

The thermoplastic resin composition was subjected to a curability evaluation test using the continuous extruder described above. The appearance of the extruded material was considered good; and the degree of a rise of the torque could be considered good. Therefore, the comprehensive evaluation was good.

(Example 7)

Evaluation using the batch system

100 parts by weight of a thermoplastic acrylic elastomer including 85 parts by weight of butyl acrylate, 15 parts by weight of acrylonitrile and 6 parts by weight of acrylic acid, 100 parts by weight of a polyfunctional acrylate (trade name: "Aronix M8530", made by Toagosei Co., Ltd., a polyester acrylate), and 8 parts by weight of a phenolic antiaging agent (trade name: "Sumilizer GM", made by Sumitomo Chemical Co., Ltd.) were charged in a kneading machine equipped with a roller-type blade (machine name: "Labo Plastomill", made by Toyo Seiki Seisaku-sho, Ltd., mixing volume: 60 ml), and kneaded at 40 rpm at 80°C for about 40 min to thereby obtain a thermoplastic resin composition.

The thermoplastic resin composition was subjected to a curability evaluation test using the batch-type mixing apparatus described above. The appearance of the resin composition for evaluation was considered good; and since the torque did not rise until 1,800 sec after the start of the mixing, the degree of a rise of the torque could be considered good. Therefore, the comprehensive evaluation was good.

(Example 8)

Evaluation using the batch system

100 parts by weight of a thermoplastic acrylic elastomer including 85 parts by weight of butyl acrylate, 15 parts by weight of acrylonitrile and 6 parts by weight of acrylic acid was kneaded by a pressurized kneader (made by Toshin Co., Ltd., mixing volume: 3 L) at a temperature of 80°C at 30 rpm for about 4 min; thereafter, 100 parts by weight of a polyfunctional acrylate (trade name: "Aronix M8530", made by Toagosei Co., Ltd., a polyester acrylate), 50 parts by weight of magnesium hydroxide (trade name: "MGZ-1", made by Sakai Chemical Industry Co., Ltd.), and 8 parts by weight of an amine-based antiaging agent (trade name: "Naugard 445", made by Crompton Corp.) were charged, and further kneaded at 30 rpm at 80°C for about 40 min to thereby obtain a kneaded material.

Then, 3 parts by weight of bis(2,4,6-trimethylbenzoyl)-phenylphosphine oxide (trade name: "Irgacure 819", made by Ciba Japan K.K.) as a photopolymerization initiator based on 100 parts by weight of the thermoplastic acrylic elastomer of the kneaded material, and 1 part by weight of hexamethylenediamine (trade name: "diak No. 1", made by Du Pont K.K.) as a crosslinking agent based on 100 parts by weight of the thermoplastic acrylic elastomer of the kneaded material were charged in a kneading machine equipped with a roller-type blade (machine name: "Labo Plastomill", made by Toyo Seiki Seisaku-sho, Ltd., mixing volume: 60 ml), and mixed at 40 rpm at 80°C for 5 min so that the photopolymerization initiator and the crosslinking agent were homogeneously mixed, to thereby obtain a thermoplastic resin composition.

The thermoplastic resin composition was subjected to a curability evaluation test using the batch-type mixing apparatus described above. The appearance of the resin composition for evaluation was considered good; and since the torque did not rise until 1,100 sec after the start of the mixing, the degree of a rise of the torque could be considered good. Therefore, the comprehensive evaluation was good.

(Example 9)

Evaluation using the batch system

100 parts by weight of a thermoplastic acrylic elastomer including 85 parts by weight of butyl acrylate, 15 parts by weight of acrylonitrile and 6 parts by weight of acrylic acid, 50 parts by weight of magnesium hydroxide (made by Konoshima Chemical Co., Ltd.), 30 parts by weight of a polyfunctional acrylate (trade name: "MK Ester A-BPE30", made by Shin-Nakamura Chemical Co., Ltd.), 45 parts by weight of a polyfunctional acrylate (trade name: "NK Ester TMPT", made by Shin-Nakamura Chemical Co., Ltd.), 2 parts by weight of hexamethylenediamine (trade name: "diak No. 1", made by Du Pont K.K.) as a crosslinking agent, 2 parts by weight of a crosslinking aid (trade name: "Nocceler DT", made by Ouchi Shinko Chemical Industrial Co., Ltd.), 8 parts by weight of an amine-based antiaging agent (trade name: "Sumilizer GM", made by Sumitomo Chemical Co., Ltd.), and 10 parts by weight of a carbon black (trade name: "#35", made by Asahi Carbon Co., Ltd.) as a colorant were mixed at 60°C for about 20 min using a 10-L pressurized kneader (machine name: "TD10-20MDX", made by Toshin Co., Ltd.) to thereby obtain a thermoplastic resin composition.

The thermoplastic resin composition was subjected to a curability evaluation test using the batch-type mixing apparatus described above. The appearance of the resin composition for evaluation was considered good; and since the torque did not rise until 1,800 sec after the start of the mixing, the degree of a rise of the torque could be considered good. Therefore, the comprehensive evaluation was good.

(Comparative Example 1)

Evaluation using the batch system

The pre-molded material fabricated in Example 3 was subjected to a curability evaluation test using the batch-type mixing apparatus described above. Curing of the resin composition for evaluation was recognized; the appearance could be considered poor; and since the torque rise became a maximum at 210 sec after the start of the mixing and the apparatus stopped, the degree of a rise of the torque could be considered poor. The gel content (gel fraction) was further measured and exceeded 50% by weight, so the gel content of the resin composition for evaluation could be considered poor. Therefore, the comprehensive evaluation was poor.

(Comparative Example 2)

Evaluation using the continuous system

100 parts by weight of a thermoplastic acrylic elastomer including 85 parts by weight of butyl acrylate, 15 parts by weight of acrylonitrile and 6 parts by weight of acrylic acid was kneaded by a pressurized kneader (made by Toshin Co., Ltd., mixing volume: 3 L) at a temperature of 80°C at 30 rpm for about 2 min; thereafter, 100 parts by weight of a polyfunctional acrylate (trade name: "Aronix M8530", made by Toagosei Co., Ltd., a polyester acrylate) was charged, and further kneaded at 80°C for about 30 min to thereby obtain a thermoplastic resin composition.

The thermoplastic resin composition was subjected to a curability evaluation test using the continuous extruder described above. The extruded material was cured and the appearance could be considered poor; and since the torque in extrusion sharply rose at several minutes after the feeding of carbon dioxide, and the apparatus stopped due to torque over, the degree of a rise of the torque could be considered poor. The gel content (gel fraction) was further measured and exceeded 50% by weight, so the gel content of the extruded material could be considered poor. Therefore, the comprehensive evaluation was poor.

(Test Evaluation 2)

A foam was fabricated using a thermoplastic resin composition, and measured for the density and the strain recovery.

(Example 1)

Evaluation of foaming properties

The thermoplastic resin composition obtained in the evaluation using the continuous system in Example 1 described above was charged in a single-screw extruder (machine name: "TP-type single-screw extruder TP-25", made by TPIC Co., Ltd., screw diameter: $\phi$ 20 mm, L/D: 30, screw: a root-diameter conical taper-type full flighted screw), and fed (extruded) at a rotation frequency of 50 rpm and at an amount to be fed (amount to be extruded) of 1 kg/hr. Carbon dioxide was fed at 0.2 kg/hr. A ring die of a gap thickness of 0.5 mm was installed as a die. The thermoplastic resin composition was extruded from the extruder through the die into the atmosphere to be thereby foamed, to thereby obtain a thermoplastic resin foam.

(Example 2)

Evaluation of foaming properties

The thermoplastic resin composition obtained in the evaluation using the continuous system in Example 2 described above was charged in a single-screw extruder (machine name: "TP-type single-screw extruder TP-25", made by TPIC Co., Ltd., screw diameter: $\phi$ 20 mm, L/D: 30, screw: a root-diameter conical taper-type full flighted screw), and fed (extruded) at a rotation frequency of 50 rpm and at an amount to be fed (amount to be extruded) of 1 kg/hr. Carbon dioxide was fed at 0.2 kg/hr. A ring die of a gap thickness of 0.5 mm was installed as a die.
The thermoplastic resin composition was extruded from the extruder through the die into the atmosphere to be thereby foamed, to thereby obtain a foamed structure.
Each surface of the foamed structure obtained was irradiated with ultraviolet rays (the irradiation energy per one surface: 750 mJ/cm$^2$ or higher) to thereby form a crosslinked structure, and was further left to stand in an atmosphere at 170°C for 3 hours for a heat treatment to thereby form a crosslinked structure, to thereby obtain a foam (thickness: about 2.0 mm).

(Example 9)

Evaluation of foaming properties

The resin composition obtained in the evaluation using the batch system in Example 9 described above was charged in a large-scale single-screw extruder (screw: full flighted screw), and fed (extruded) at a rotation frequency of 30 rpm. Carbon dioxide was fed so as to be 3 to 4% by weight based on the total amount (100% by weight) of the resin composition. The resin composition was extruded from the extruder through the die (ring die) into the atmosphere to be thereby foamed, to thereby obtain a foamed structure.
One surface of the foamed structure obtained was irradiated with electron beams (the irradiation dose: 200 kGy) and was further left to stand in an atmosphere at 210°C for 5 min for a heat treatment to thereby form a crosslinked structure, to thereby obtain a foam (thickness: about 5.0 mm).
In the evaluations of the foaming properties of Example 1, Example 2 and Example 9 described above, the gas injection pressure of carbon dioxide injected was raised to 25 MPa by a supercritical $CO_2$ production pump, and thereafter reduced to about 10 MPa. Since the temperature of the carbon dioxide gas in the injection was set at 25°C, and the temperature in a gas injection portion of the single-screw extruder was set at 80°C, the injected carbon dioxide immediately enters a supercritical state.

[Measurement method of the density (apparent density)]

The density was determined by measuring a specific gravity using an electronic densimeter (trade name: "MD-200S", made by Alfa Mirage Co., Ltd.). The measurement of the density was carried out after a foam was stored at room temperature for 24 hours after the foam production.

[Measurement method of the strain recovery rate (80°C, 50% compression set)]

A foam was cut into a square having a one side length of 25 mm to thereby make a test piece, whose thickness was accurately measured. The thickness of the test piece at this time was taken to be a. The test piece was compressed to 50% of the thickness (thickness b) by using a spacer having a thickness b half the thickness of the test piece, and stored at this state and at 80°C for 24 hours. After 24 hours, the temperature was returned to normal temperature with the compression state being maintained, and the compression state was relieved. The thickness of the test piece was accurately measured at 30 min after the relief. The thickness of the test piece at this time was taken to be c. The ratio of the recovery distance to the compressed distance was defined as a strain recovery rate (80°C, 50% compression set) .

$$\text{Strain recovery rate (80°C, 50\% compression set) [\%]}$$

$$= (c - b) \: / \: (a - b) \times 100$$

The strain recovery rate is a "strain recovery rate (80°C, 50% compression set) at 30 min after the relief".
For Example 2 and Example 9, in addition to the thickness of the test piece at 30 min after the compression state was relieved, the thickness of the test piece at 24 hours after the compression state was relieved was accurately measured. The thickness of the test piece at this time was taken to be d. Also the strain recovery rate (80°C, 50% compression set) at 24 hours after the relief was determined by the following expression.

$$\text{Strain recovery rate (80°C, 50\% compression set) [\%]}$$

$$= (d - b) \: / \: (a - b) \times 100$$

The strain recovery rate is a "strain recovery rate (80°C, 50% compression set) at 24 hours after the relief".
[Table 1]

Table 1

| | Density [g/cm$^3$] | Strain Recovery Rate (80°C, 50% compression set) [%] |
|---|---|---|
| Example 1 | 0.1 | - |
| Example 2 | 0.035 | 58 |
| In Table 1, "-" indicates that no measurement was carried out. | | |

In Example 9, the density was 0.084 g/cm$^3$. The strain recovery rate (80°C, 50% compression set) at 30 min after the relief was 85%, and the strain recovery rate (80°C, 50% compression set) at 24 hours after the relief was 94%. In Example 2, the strain recovery rate (80°C, 50% compression set) at 24 hours after the relief was 77%.

**Claims**

1. A thermoplastic resin foam, being obtained from a thermoplastic resin composition comprising a thermoplastic elastomer, an active energy-ray curable compound and a radical trapping agent.

2. A thermoplastic resin foam, being obtained from a thermoplastic resin composition comprising a thermoplastic elastomer, an active energy-ray curable compound, a thermal crosslinking agent and a radical trapping agent.

3. The thermoplastic resin foam according to claim 1 or 2, being obtained by forming a foamed structure obtained by foam molding the thermoplastic resin composition, and thereafter irradiating the foamed structure with an active energy ray.

4. The thermoplastic resin foam according to claim 1 or 2, wherein a blowing agent used in foam molding a thermoplastic resin composition is carbon dioxide or nitrogen.

**5.** The thermoplastic resin foam according to claim 1 or 2, wherein a blowing agent used in foam molding a thermoplastic resin composition is a fluid in a supercritical state.

**6.** The thermoplastic resin foam according to claim 1 or 2, wherein the thermoplastic elastomer has a reactive functional group.

**7.** The thermoplastic resin foam according to claim 1 or 2, wherein the thermoplastic resin composition contains 0.05 to 10 parts by weight of the radical trapping agent based on 100 parts by weight of the thermoplastic elastomer.

**8.** The thermoplastic resin foam according to claim 1 or 2, wherein the radical trapping agent is a phenolic or amine-based antioxidant or antiaging agent.

**9.** A process for producing a thermoplastic resin foam, comprising: foam molding a thermoplastic resin composition comprising a thermoplastic elastomer, an active energy-ray curable compound and a radical trapping agent to thereby form a foamed structure; and thereafter irradiating the foamed structure with an active energy ray to thereby form a crosslinked structure by the active energy-ray curable compound.

**10.** A process for producing a thermoplastic resin foam, comprising: foam molding a thermoplastic resin composition comprising a thermoplastic elastomer, an active energy-ray curable compound, a thermal crosslinking agent and a radical trapping agent to thereby form a foamed structure; thereafter irradiating the foamed structure with an active energy ray to thereby form a crosslinked structure by the active energy-ray curable compound; and further heating the resultant to thereby form a crosslinked structure by the thermal crosslinking agent.

**11.** The process for producing a thermoplastic resin foam according to claim 9 or 10, wherein a blowing agent used in foam molding a thermoplastic resin composition is carbon dioxide or nitrogen.

**12.** The process for producing a thermoplastic resin foam according to claim 9 or 10, wherein a blowing agent used in foam molding a thermoplastic resin composition is a fluid in a supercritical state.

**13.** A thermoplastic resin composition, wherein the thermoplastic resin composition comprises a thermoplastic elastomer, an active energy-ray curable compound and a radical trapping agent, and is used for forming a thermoplastic resin foam.

## INTERNATIONAL SEARCH REPORT

| | International application No. |
|---|---|
| | PCT/JP2011/050702 |

**A. CLASSIFICATION OF SUBJECT MATTER**
*C08J9/12*(2006.01)i, *C08K5/13*(2006.01)i, *C08K5/3435*(2006.01)i, *C08L101/00* (2006.01)i

According to International Patent Classification (IPC) or to both national classification and IPC

**B. FIELDS SEARCHED**

Minimum documentation searched (classification system followed by classification symbols)
C08J9/12, C08K5/13, C08K5/3435, C08L101/00

Documentation searched other than minimum documentation to the extent that such documents are included in the fields searched
| | | |
|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-146136 A (JSR Corp.), 09 June 2005 (09.06.2005), paragraphs [0052], [0064], [0073] to [0077] (Family: none) | 1-13 |
| A | WO 2008/149749 A1 (Nitto Denko Corp.), 11 December 2008 (11.12.2008), pages 26 to 27 & JP 2009-13397 A & US 2010/0178488 A & EP 2157124 A1 & CN 101679666 A & KR 10-2010-0021608 A | 1-13 |
| P,A | WO 2010/082562 A1 (Nitto Denko Corp.), 22 July 2010 (22.07.2010), pages 33 to 34 & JP 2010-163562 A & JP 2010-163563 A | 1-13 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 March, 2011 (08.03.11) | 15 March, 2011 (15.03.11) |

| Name and mailing address of the ISA/ Japanese Patent Office | Authorized officer |
|---|---|
| Facsimile No. | Telephone No. |

## INTERNATIONAL SEARCH REPORT

International application No.

PCT/JP2011/050702

---

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

---

**Box No. III**      **Observations where unity of invention is lacking (Continuation of item 3 of first sheet)**

This International Searching Authority found multiple inventions in this international application, as follows:
The matter common to claims 1 - 13 is publicly known as disclosed in JP 2005-146136 A (JSR Corp.), 9 June 2005 (09.06.2005), [0052], [0064], [0073] - [0077], (Family: none), and therefore is not a "special technical feature".

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10168215 B
- JP 2009013397 A